# FASCICULE DE BREVET EUROPEEN

(11) **EP 1 044 849 B1**
(45) Date de publication et mention de la délivrance du brevet: **24.03.2004**
(21) Numéro de dépôt: 00400977.5
(22) Date de dépôt: 10.04.2000
(51) Int. Cl.: B60R 13/02

(54) **Agrafe moulée en matière plastique pour la construction automobile**
Befestigungselement aus geformtem Kunststoff für Automobilbau
Molded plastics fastener for automobile construction

(30) Priorité: 16.04.1999 FR 9904836
(43) Date de publication de la demande: 18.10.2000
(73) Titulaire: Renault s.a.s., 92100 Boulogne Billancourt (FR)
(72) Inventeur: Ponceau, Philippe, 78610 Le Perray en Yvelines (FR)

(56) Documents cités:
- EP-A- 0 412 253
- DE-A- 3 938 431
- DE-A- 19 530 262
- DE-A- 19 546 086
- DE-A- 19 803 402
- DE-U- 8 529 669
- DE-U- 9 408 339
- FR-A- 2 530 301

## Description

La présente invention concerne une agrafe moulée en matière plastique.

L'invention concerne plus particulièrement une agrafe notamment pour la fixation d'un élément d'habillage sur une pièce en tôle de véhicule automobile, du type comportant un corps fixé par emboîtement dans au moins une ouverture de l'élément en tôle et qui porte au moins une première pince élastique comportant des moyens anti-retour pour serrer et retenir une nervure longitudinale appartenant à l'élément d'habillage et qui est introduite dans la pince selon une direction transversale globalement perpendiculaire à la direction longitudinale de la nervure, et au moins une autre pince élastique qui est décalée latéralement par rapport à la première pince élastique.

Une telle agrafe est utilisée, en plusieurs exemplaires (voir DE-A-3 938 431), dans le cas d'un agencement pour l'habillage intérieur d'un élément de structure de la caisse du véhicule telle que par exemple une partie d'encadrement délimitant une ouverture latérale de la caisse du véhicule permettant d'y accéder.

Un tel élément d'encadrement se présente par exemple sous la forme d'une pièce en tôle assemblée à partir de plusieurs composants et présentant une forme générale de caisson creux conformé selon un contour ou profil correspondant à celui de l'ouverture.

Par exemple, en partie inférieure, l'élément d'encadrement est sensiblement horizontal et longitudinal dans le cas d'une ouverture fermée par une porte latérale, et il est délimité par un panneau de tôle sensiblement vertical et par panneau de tôle sensiblement horizontal.

Afin d'améliorer l'esthétique et le confort du véhicule, il est souhaitable d'habiller quasi entièrement les parties de tôle de la caisse du véhicule apparentes à l'intérieur de l'habitacle, et notamment par exemple cette partie inférieure d'encadrement de porte.

À cet effet, il est connu de rapporter sur les différentes parties de l'encadrement, et par exemple sur sa partie inférieure, un élément d'habillage réalisé par exemple par moulage en matériau synthétique, notamment en matière plastique, qui présente une forme générale allongée complémentaire de celle de la pièce de tôle qu'il habille et comportant deux pans qui, en position montée de l'élément d'habillage sur la pièce en tôle, s'étendent parallèlement aux panneaux en regard de la pièce en tôle.

Pour la fixation d'un tel élément d'habillage, il est connu de faire appel à des moyens de fixation qui sont fixés sur la pièce en tôle et dans lesquels l'élément d'habillage est emboîté selon direction transversale globalement perpendiculaire à la direction longitudinale générale de l'élément d'habillage.

Ainsi, il est connu de faire appel à plusieurs agrafes dont chacune est du type comportant un corps fixé par emboîtement dans au moins une ouverture de l'élément en tôle et qui porte au moins une première pince élastique comportant des moyens anti-retour pour serrer et retenir une nervure longitudinale appartenant à l'élément d'habillage et qui est introduite dans la pince selon une direction transversale globalement perpendiculaire à la direction longitudinale de la nervure.

Un exemple d'une telle agrafe est décrit et représenté dans le document FR-A-2.626.628.

L'invention vise à proposer un perfectionnement à une telle agrafe permettant notamment d'assurer au moyen de cette agrafe le montage et la fixation d'éléments ou d'organes complémentaires sur la caisse du véhicule et/ou de faciliter le montage et la fixation des éléments d'habillage.

Dans ce but, l'invention propose une agrafe caractérisée en ce que elle comporte des entretoises pour le positionnement transversal de l'agrafe par rapport à la pièce en tôle, et pour le maintien d'un tapis entre la tôle et le corps de l'agrafe, et en ce que les pinces élastiques et les entretoises sont réalisées venues de matière par moulage.

Selon d'autres caractéristiques de l'invention :
- la deuxième pince est apte à recevoir un tronçon d'un câble électrique ou d'une canalisation, selon une direction transversale globalement perpendiculaire à la direction longitudinale de ce tronçon, et comporte des moyens anti-retour pour retenir ce tronçon par rapport à la pièce en tôle.
- elle comporte une pince élastique supplémentaire pour retenir une autre nervure longitudinale appartenant à l'élément d'habillage et qui est introduite dans la pince supplémentaire selon une direction transversale globalement perpendiculaire à la direction longitudinale de cette autre nervure qui est serrée dans la pince élastique supplémentaire.
- les pinces élastiques s'étendent dans des plans sensiblement parallèles.
- la première s'étend dans un plan sensiblement perpendiculaire au plan de la deuxième pince et/ou de la pince supplémentaire,
- le corps est une plaque dont la face externe porte des moyens pour sa fixation sur la pièce en tôle et dont la face interne porte la première pince élastique ;
- la face interne de la plaque porte la deuxième pince élastique ;
- la deuxième pince élastique est portée par des bras de l'agrafe qui la relient au corps en forme de plaque ;
- la face externe de la plaque comporte des entretoises pour le positionnement transversal de l'agrafe par rapport à la pièce en tôle.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en section transversale qui représente un premier mode de réalisation d'une agrafe conforme aux enseignements de l'invention utilisée pour la fixation d'un élément d'habillage et de câbles électriques ;
- la figure 2 est une vue schématique en perspective éclatée qui illustre certains composants de la figure 1 ;
- la figure 3 est une vue de face, selon la flèche F3 de la figure 2 de l'agrafe selon l'invention ; et
- la figure 4 est une vue similaire à celle de la figure 1 qui représente un deuxième mode de réalisation d'une agrafe conforme aux enseignements de l'invention pour la fixation d'un élément d'habillage.

Dans la description qui va suivre, afin d'en faciliter la compréhension ainsi que celle des revendications, on utilisera à titre non limitatif les termes "horizontal", "vertical", "supérieur", "inférieur", "avant", "arrière", etc.

Des éléments identiques, similaires ou analogues seront désignés par les mêmes chiffres de référence.

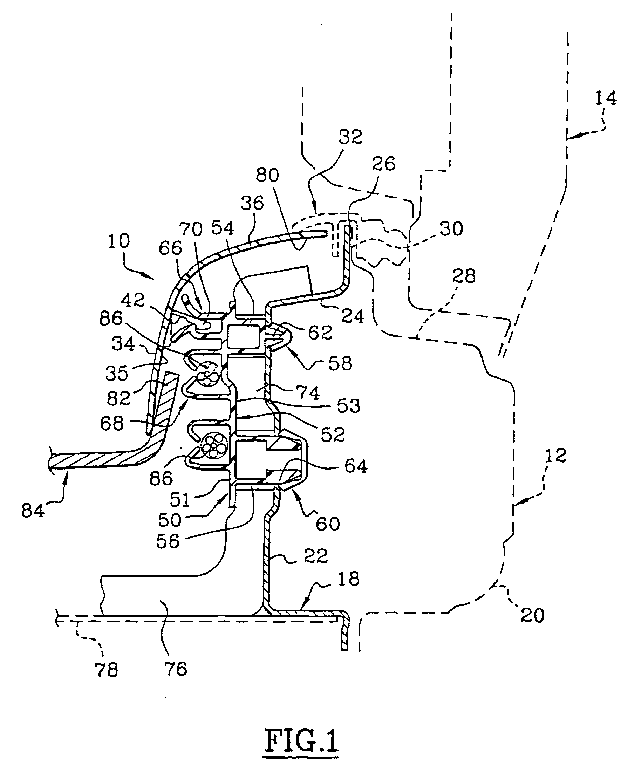

On a représenté à la figure 1 un élément d'habillage 10 destiné à recouvrir une pièce en tôle 12 appartenant à la structure de caisse d'un véhicule automobile.

La pièce 12 est ici un caisson longitudinal inférieur qui délimite la partie inférieure de l'encadrement de l'ouverture d'une porte latérale 14 du véhicule et qui est réalisée en deux pièces soudées 18 et 20.

La pièce intérieure 18 comporte notamment un panneau longitudinal et vertical 22 et un panneau longitudinal et horizontal étroit 24 qui se prolonge par une bande de tôle longitudinale et verticale 26.

De la même manière, la pièce extérieure 20 comporte un panneau longitudinal et horizontal étroit à 28 qui se prolonge par une bande de tôle longitudinale et verticale 30 adjacente à la bande 26 de manière à permettre le soudage, par exemple par points, des bandes 26 et 30 pour la réalisation du caisson 12.

Selon un agencement connu, le bord longitudinal et horizontal supérieur libre commun aux bandes 26 et 30 est équipé d'un joint 32 de porte qui est monté à cheval sur les bandes adjacentes 26 et 30.

L'élément d'habillage 10 est un composant réalisé par moulage en matière plastique et qui est essentiellement constitué, dans sa partie principale d'orientation longitudinale perpendiculaire au plan de la figure 1, par un pan vertical 34 en forme générale de plaque et par un pan sensiblement horizontal 36 en forme de plaque qui, en position montée et fixée de l'élément d'habillage 10 et comme on peut le voir à la figure 1, s'étendent sensiblement parallèlement au panneau vertical 22 et au panneau horizontal 24 du caisson 12 respectivement, à distance transversale de ces panneaux.

Dans ce premier mode de réalisation, la face interne 35 du pan 34 comporte une nervure de montage et de fixation 42 qui s'étend globalement dans un plan transversal perpendiculaire au plan du pan 34 qui la porte et qui s'étend donc ici dans un plan sensiblement horizontal.

La nervure 42 est réalisée venue de matière par moulage avec l'élément d'habillage 10 et elle peut s'étendre sur toute la longueur de sa partie principale d'orientation longitudinale ou être constituée par des tronçons longitudinaux de nervure répartis le long de l'élément d'habillage 10.

Pour la fixation ou accrochage de l'élément d'habillage 10 sur le caisson 12, il est ici prévu de manière connue de faire appel à une série d'agrafes 50 qui sont réparties longitudinalement le long du caisson 12 sur le panneau vertical 22 et dont l'une est représentée aux figures 1 à 3.

Chaque agrafe 50 est une pièce moulée en matière plastique constituée pour l'essentiel par un corps en forme de plaque verticale 52 qui s'étend parallèlement au panneau vertical 22.

La plaque 52, pour sa fixation sur le panneau 22, comporte deux blocs 54 et 56 formant entretoises et dont chacun se termine par une griffe 58, 60 reçue par emboîtement élastique dans un trou complémentaire 62, 64 du panneau 22 dont chacun présente ici une forme générale oblongue d'orientation longitudinale et horizontale, les trous 62, 64 étant de dimensions différentes de manière à constituer des moyens de détrompage pour le montage de l'agrafe sur le panneau 22, c'est-à-dire dans une position et une orientation spatiale déterminée.

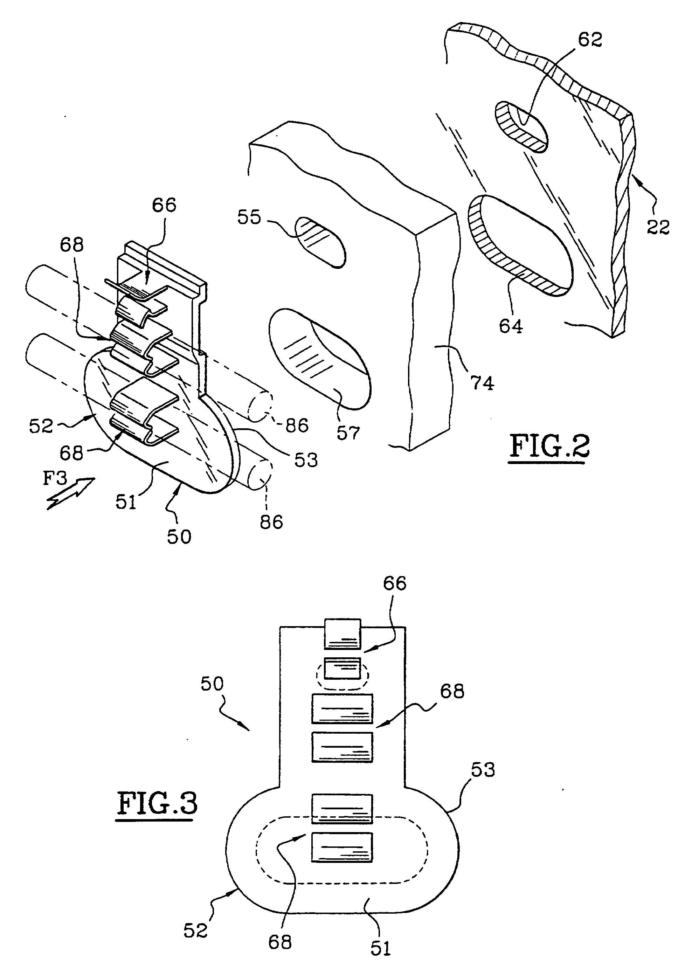

On a aussi représenté aux figures 1 et 2 une partie d'un tapis 76 qui recouvre une tôle de plancher 78 et dont la partie supérieure latérale 74 épouse le panneau vertical 22 en étant fixé à ce dernier par l'intermédiaire de l'agrafe 50 dont les blocs 54, 56 formant entretoises traversent des trous oblongs complémentaires 55 et 57, cette partie 74 du tapis d'isolation phonique et thermique 76 étant ainsi maintenue avec un léger serrage transversal entre la face externe 53 de la plaque 52 de l'agrafe 50 et la face interne en vis-à-vis du panneau vertical 22 du caisson 12.

Selon une conception générale connue, la face interne 51 de la plaque 52 de l'agrafe 50 porte ici une première pince élastique 66 destinée à serrer et à retenir la première nervure 42 portée par la face interne 35 du pan 34. L'extrémité libre 70 de la nervure 42 est conformée en une pointe de flèche afin de permettre l'emboîtement automatique de la nervure 42 dans la pince élastique 66 puis la retenue, selon la direction transversale, de la nervure 42 dans sa pince élastique 66.

Comme on peut le voir à la figure 1, la partie inférieure du pan vertical 34 recouvre partiellement un bord en vis-à-vis 82 d'un élément 84 de protection du sol, tandis qu'une lèvre du joint de porte 32 recouvre le bord d'extrémité libre et d'orientation longitudinale 80 du pan horizontal 36 de l'élément d'habillage 10.

Conformément aux enseignements de l'invention, l'agrafe 50 comporte au moins une deuxième pince élastique réalisée elle aussi venue de matière par moulage avec l'agrafe 50.

Dans le premier mode de réalisation illustré à la figure 1, la face interne 51 de la plaque 52 de l'agrafe 50 comporte une paire de deuxièmes pinces élastiques 68 dont chacune est ici d'orientation longitudinale et parallèle à celle de la première pince élastique 66, c'est-à-dire que les trois pinces élastiques parallèles 66 et 68 sont ouvertes dans des plans parallèles, horizontalement vers l'intérieur de l'habitacle.

Dans ce premier mode de réalisation, chacune des deux pinces élastiques de la paire de deuxièmes pinces élastiques 68 sert au montage et à la fixation d'un tronçon d'un câble électrique 86 qui est introduit dans la pince correspondante 68 selon une direction transversale, c'est-à-dire selon direction perpendiculaire à la direction longitudinale générale du tronçon de câble 86.

Chaque deuxième pince élastique 68 est conformée en forme de griffe inversée c'est-à-dire qu'elle comporte des moyens anti-retour évitant, après montage, l'échappement accidentel du tronçon 86 hors de sa pince élastique 68.

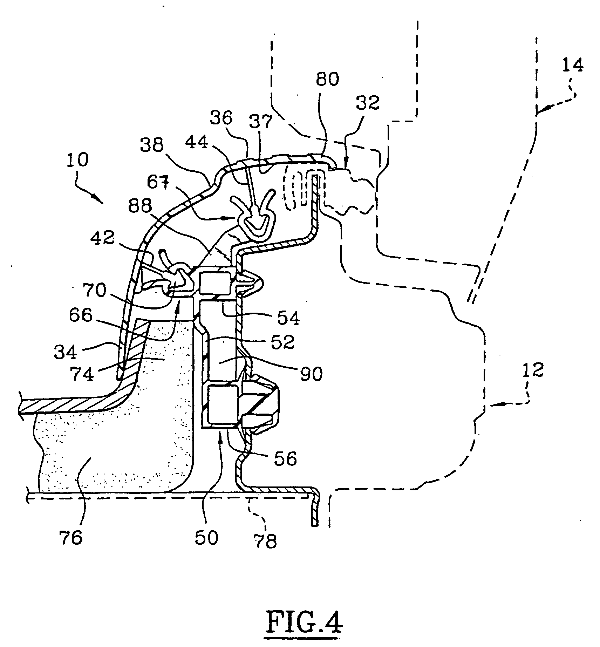

Dans le deuxième mode de réalisation illustré à la figure 4, l'agrafe 50 comporte une pince élastique supplémentaire 67 qui est prévue pour permettre la fixation complémentaire du pan supérieur horizontal 36 de l'élément d'habillage 10, celui-ci comportant à cet effet sur sa face interne 37 une deuxième nervure 44, réalisée venue de matière par moulage avec l'élément d'habillage 10, qui s'étend transversalement dans un plan sensiblement perpendiculaire à celui de la première nervure 42.

La pince élastique 67, d'orientation générale longitudinale, est reliée au corps en forme de plaque 52 de l'agrafe 50 par des bras latéraux 88 qui s'étendent notamment à partir du bloc supérieur 54.

Ainsi, la pince élastique 67 s'étend dans un plan longitudinal et vertical sensiblement perpendiculaire au plan de la première pince élastique 66.

Cette conception à deux pinces élastiques 66 et 67 pour le montage et la fixation de l'élément d'habillage 10 permet de réaliser celui-ci avec une charnière 38 entre ses deux pans 34 et 36 de manière à réaliser l'élément d'habillage 10 par moulage dans un moule dans lequel les deux pans 34 et 36 sont sensiblement parallèles entre eux lors du moulage.

Outre cette facilité de moulage, la charnière 38 permet une fixation en deux étapes successives des pans 34 puis 36, en rendant alors possible la protection du joint d'étanchéité 32 par le bord latéral 80 pan supérieur horizontal 36 qui le recouvre après montage.

Dans le deuxième mode de réalisation, les deux blocs 54 et 56 forment toujours entretoises, mais ils ne traversent pas le tapis 76,74 et il est alors possible de prévoir une nervure 90 de renfort de l'agrafe 50 qui s'étend verticalement entre les blocs de 54 et 56.

Sans sortir du cadre de l'invention, il est possible de combiner les enseignements des deux modes de réalisation, c'est-à-dire de prévoir sur la face interne 51 de la plaque 52 de l'agrafe 50 une ou plusieurs pinces élastiques supplémentaires pour la fixation de tronçons de câbles électriques ou de canalisations, et de prévoir une pince élastique supplémentaire, décalée latéralement et dans un autre plan pour recevoir une nervure supplémentaire de montage et de fixation de l'élément d'habillage 10.

L'invention n'est pas non plus limitée à la fixation d'un élément d'habillage du type de celui décrit et représenté précédemment, les agrafes conformes aux enseignements de l'invention pouvant être utilisées pour recouvrir d'autre pièce en tôle de la caisse du véhicule ou d'un ouvrant articulé.

## Revendications

1. Agrafe (50) moulée en matière plastique, notamment pour la fixation d'un élément d'habillage (10) sur une pièce en tôle (12) d'un véhicule automobile, du type comportant un corps (52) fixé par emboîtement dans au moins une ouverture (62, 64) de l'élément en tôle et qui porte au moins une première pince élastique (66) comportant des moyens anti-retour pour serrer et retenir une nervure longitudinale (42) appartenant à l'élément d'habillage (10) et qui est introduite dans la pince (66) selon une direction transversale globalement perpendiculaire à la direction longitudinale de la nervure, et au moins une autre pince élastique (67,68) qui est décalée latéralement par rapport à la première pince élastique (66), **caractérisée en ce qu'**elle comporte des entretoises (54, 56) pour le positionnement transversal de l'agrafe (50) par rapport à la pièce en tôle (12), et pour le maintien d'un tapis (76) entre la tôle (12) et le corps (52) de l'agrafe, et **en ce que** les pinces élastiques et les entretoises sont réalisées venues de matière par moulage.

2. Agrafe (50) moulée en matière plastique selon la revendication 1, **caractérisée en ce que** la deuxième pince (68) est apte à recevoir un tronçon (86) d'un câble électrique ou d'une canalisation, selon une direction transversale globalement perpendiculaire à la direction longitudinale de ce tronçon (86), et comporte des moyens anti-retour pour retenir ce tronçon (86) par rapport à la pièce en tôle (12).

3. Agrafe selon l'une quelconque des revendications précédentes, **caractérisée en ce qu'**elle comporte une pince élastique supplémentaire (67) pour retenir une autre nervure longitudinale (44) appartenant à l'élément d'habillage (10, 34, 36) et qui est introduite dans la pince supplémentaire (67) selon une direction transversale globalement perpendiculaire à la direction longitudinale de cette autre nervure (44) qui est serrée dans la pince élastique supplémentaire (67).

4. Agrafe selon l'une quelconque des revendications précédentes, **caractérisée en ce que** les pinces élastiques (66, 67, 68) s'étendent dans des plans sensiblement parallèles.

5. Agrafe selon l'une quelconque des revendications 1 à 4, **caractérisée en ce que** la première (66) s'étend dans un plan sensiblement perpendiculaire au plan de la deuxième pince (68) et/ou de la pince supplémentaire (67).

6. Agrafe selon l'une quelconque des revendications précédentes, **caractérisée en ce que** le corps est une plaque (52) dont la face externe (53) porte des moyens (58, 60) pour sa fixation sur la pièce en tôle (12) et dont la face interne (51) porte la première pince élastique (66).

7. Agrafe selon la revendication 6 prise en combinaison avec la revendication 5, **caractérisée en ce que** la face interne de la plaque (52) porte la deuxième pince élastique (68) et/ou de la pince supplémentaire (67).

8. Agrafe selon la revendication 6 prise en combinaison avec la revendication 5, **caractérisée en ce que** la pince supplémentaire (67) est portée par des bras (88) de l'agrafe (50) qui la relie au corps en forme de plaque (52).

## Claims

1. A clip (50) moulded from plastic material, and adapted in particular to fasten a covering member (10) on a sheet metal component (12) of an automobile vehicle, of the type comprising a body (52) secured by fitting in at least one opening (62, 64) of the sheet metal member and bearing at least a first elastic gripper (66) comprising anti-return means in order to clamp and retain a longitudinal rib (42) belonging to the covering member (10) which is inserted in the gripper (66) in a transverse direction perpendicular overall to the longitudinal direction of the rib, and at least another elastic gripper (67, 68) which is offset laterally with respect to the first elastic gripper (66), **characterised in that** it comprises struts (54, 56) for the transverse positioning of the clip (50) with respect to the sheet metal member (12) and for the maintenance of a mat (76) between the sheet metal (12) and the body (52) of the clip, and **in that** the elastic grippers and the struts are moulded in one piece.

2. A clip (50) moulded from plastic material as claimed in claim 1, **characterised in that** the second gripper (68) is adapted to receive a section (86) of an electric cable or duct, in a transverse direction perpendicular overall to the longitudinal direction of this section (86) and comprises anti-return means in order to retain this section (86) with respect to the sheet metal member (12).

3. A clip as claimed in any one of the preceding claims, **characterised in that** it comprises an additional elastic gripper (67) in order to retain a further longitudinal rib (44) belonging to the covering member (10, 34, 36) and which is inserted in the additional gripper (67) in a transverse direction perpendicular overall to the longitudinal direction of this other rib (44) which is clamped in the additional elastic gripper (67).

4. A clip as claimed in any one of the preceding claims, **characterised in that** the elastic grippers (66, 67, 68) extend in substantially parallel planes.

5. A clip as claimed in any one of claims 1 to 4, **characterised in that** the first gripper (66) extends in a plane substantially perpendicular to the plane of the second gripper (68) and/or of the additional gripper (67).

6. A clip as claimed in any one of the preceding claims, **characterised in that** the body is a plate (52) whose outer surface (53) bears means (58, 60) for its fastening on the sheet metal member (12) and whose inner surface (51) bears the first elastic gripper (66).

7. A clip as claimed in claim 6, taken in conjunction with claim 5, **characterised in that** the inner surface of the plate (52) bears the second elastic gripper (68) and/or the additional gripper (67).

8. A clip as claimed in claim 6, taken in conjunction with claim 5, **characterised in that** the additional gripper (67) is borne by arms (88) of the clip (50) that connects it to the plate-shaped body (52).

## Patentansprüche

1. Befestigungselement (50) aus geformtem Kunststoff, insbesondere für die Befestigung eines Verkleidungsstücks (10) auf einem Blechstück (12) eines Automobils, von dem Typ, welcher einen Körper (52) aufweist, welcher durch Einfügung in mindestens eine Öffnung (62, 64) des Blechelements befestigt ist und welches mindestens eine erste elastische Klemme (66) aufweist, die Rückhalte-Mittel zum Einklemmen und Zurückhalten einer longitudinalen Rippe (42) aufweist, welche zu dem Verkleidungselement (10) gehört und welche in die Klemme (66) eingeführt wird entlang einer transversalen Richtung, welche insgesamt rechtwinklig zu der longitudinalen Richtung der Rippe ist, und mindestens eine weitere elastische Klemme (67, 68), welche lateral versetzt ist im Verhältnis zu der ersten elastischen Klemme (66), **dadurch gekennzeichnet, dass** es Stege (54, 56) für die transversale Positionierung des Befestigungselements (50) im Verhältnis zu dem Blechstück (12) aufweist, und für den Halt einer Matte (76) zwischen dem Blech (12) und dem Körper (52) des Befestigungselements, und dadurch, dass die elastischen Klemmen und die Stege aus einem Material kommend durch Formen realisiert sind.

2. Befestigungselement (50) aus geformten Kunststoff gemäß Anspruch 1, **dadurch gekennzeichnet, dass** die zweite Klemme (68) geeignet ist, ein Teilstück (86) eines elektrischen Kabels oder einer Leitung entlang einer transversalen Richtung aufzunehmen, welche insgesamt rechtwinklig zu der longitudinalen Richtung dieses Teilstücks (86) ist und Rückhalte-Mittel zum Rückhalten des Teilstücks (86) im Verhältnis zu dem Blechstück (12) aufweist.

3. Befestigungselement gemäß einem der vorhergehenden Elemente, **dadurch gekennzeichnet, dass** es eine zusätzliche elastische Klemme (67) aufweist, um eine weitere longitudinale Rippe (44) zurück zu halten, die zu dem Verkleidungsstück (10, 34, 36) gehört und welche in die zusätzliche Klemme (67) eingeführt wird entlang einer transversalen Richtung, die insgesamt rechtwinklig zu der longitudinalen Richtung der anderen Rippe (44) ist, welche in der zusätzlichen Klemme (67) eingeklemmt ist.

4. Befestigungselement gemäß einem der vorhergehenden Ansprüche, **dadurch gekennzeichnet, dass** die elastischen Klemmen (66, 67, 68) sich in deutlich parallelen Ebenen erstrecken.

5. Befestigungselement gemäß einem der Ansprüche 1 bis 4, **dadurch gekennzeichnet, dass** die erste (66) sich in einer Ebene erstreckt, die deutlich rechtwinklig zu der Ebene der zweiten Klemme (68) und/oder der zusätzlichen Klemme (67) ist.

6. Befestigungselement gemäß einem der vorhergehenden Ansprüche, **dadurch gekennzeichnet, dass** der Körper eine Platte (52) ist, deren Außenseite (53) Mittel (58, 60) trägt für ihre Befestigung auf dem Blechstück (12) und deren Innenseite (51) die erste elastische Klemme (66) trägt.

7. Befestigungselement gemäß Anspruch 6 in Kombination mit Anspruch 5, **dadurch gekennzeichnet, dass** die Innenseite der Platte (52) die zweite elastische Klemme (68) und/oder der zusätzlichen Klemme (67) trägt.

8. Befestigungselement gemäß Anspruch 6 in Kombination mit Anspruch 5, **dadurch gekennzeichnet, dass** die zusätzliche Klemme (67) von Armen (88) des Befestigungselements (50) getragen wird, welche diese mit dem Körper in Form einer Platte (52) verbinden.
